# EUROPEAN PATENT APPLICATION

(11) **EP 3 907 187 A1**
(43) Date of publication of application: **10.11.2021**
(21) Application number: 20173025.6
(22) Date of filing: 05.05.2020
(51) Int. Cl.: C02F 1/00, B63J 4/00, C02F 1/38, C02F 1/40, C02F 101/32, C02F 103/00

(54) **BILGE WATER SYSTEM AND METHOD OF OPERATING BILGE WATER SYSTEM**

(71) Applicant: Alfa Laval Corporate AB, 221 00 Lund (SE)
(72) Inventor: MESLOT, Nicolas, SE-146 36 TULLINGE (SE)
(74) Representative: Alfa Laval Attorneys

(57) **Abstract**

The present invention relates to a method and system of operating a bilge water system (1) comprising a bilge water container (2), a bilge water pump (4) downstream of the bilge water container, a heater (6) downstream of the bilge water pump and upstream of an oily water separator (8). The bilge water container, the bilge water pump, and the oily water separator are arranged in fluid connection via a bilge water supply line (10). The oily water separator comprises a bilge water inlet (18) in fluid connection with the bilge water supply line (10), a first outlet (28) in fluid connection with a water discharge line (110) for separated water and a second outlet (38) for conveying separated sludge to a sludge container (12). The system further comprises a freshwater control valve (14) in fluid connection with the separator (8) and a freshwater container (16). The system is configured to perform determining a conductivity value (Cᵥ) of the bilge water by means of a sensor in the bilge water supply line and/or in the water discharge line, receiving the determined conductivity value (Cᵥ) in a control unit and comparing the determined conductivity value (Cᵥ) with a reference conductivity value (C_{ref}) in the control unit. The system is configured to initiate a corrosion reducing operational mode if the determined conductivity value is higher than the reference conductivity value (C_{ref}) or continuing with a normal operational mode, if the conductivity value (Cᵥ₎ is lower than the reference conductivity value (C_{ref}).

## Description

### TECHNICAL AREA OF INVENTION

The present invention relates to a bilge water system, a method for operating a bilge water system, a computer program to perform the steps of the method and a computer program product comprising a program code stored on a computer-readable medium for performing the method steps.

### BACKGROUND

Bilge water, also referred to as "bilge", is the collective name for the contents of a ship's bilge water tanks and wells. The wells may be located just above a hull in the lowermost part of the vessel. Bilge water can come from any part of the vessel, such as from technical rooms, propulsion systems, and various equipment and additionally, bilge water may include fluids from machinery spaces and internal drainage systems. The bilge water may contain soot, particles, fluid from leakages, spills and seawater, and the content of the bilge water may vary from one moment to the next.

Large ships, such as tankers, container vessels, cruise vessels and bulk carriers, must be equipped with a bilge water treatment system. The purpose of the bilge water treatment system is to collect and/or supply bilge water to a bilge separator, in which oil is separated from the bilge water before the bilge water is released to the sea. According to the International Marine Organization (IMO) rules, the oil content of the separated water can be of maximum 15 ppm of oil. If the content is higher, the discharge of the separated water back into the sea must be stopped. Therefore, generally there is a great need for a reliable and robust bilge water system on board of vessels.

Oily water separators are known as effective equipment in bilge water systems to separate oil from the bilge water. US 4,018,683 A shows a bilge water disposal system which includes means for separating oil from the bilge water before disposal of the bilge water. WO 00/10714 A1 discloses a centrifugal separator which may be used for separation of oil from bilge water. Thus, existing solutions for the separation of oil from bilge water exist, but there is still a need to improve the robustness and reliability of such systems.

### SUMMARY OF INVENTION

Due to the varying content of sea water in the bilge water, the bilge water treatment systems may be exposed to corrosive conditions onboard vessels. For example, large amount of sea water, which could be higher than 50%, increases the risk for accelerated corrosion of components of the bilge water systems, especially components in oily water separators. The components in piping and the oily water separators may comprise a type 316 stainless steel in addition to other metallic materials. Type 316 is mechanically robust, well-known and economical material, which is resistant to chlorides corrosion when exposed to sea water at certain levels, usually of less than about 1000ppm chlorides. In some cases, this level may correspond to a sea water content of less than about 5% of weight sea water. However, as mentioned, the sea water content may be even higher. High content of sea water in the bilge water may lead to higher amount of chlorides than the separators are designed for, thereby causing premature corrosion. Additionally, the bilge water is usually heated to enhance oil separation in the bilge water treatment systems, which may further increase the risk for premature corrosion.

In view of the above, there is a great desire to limit the risk for accelerated corrosion in the bilge water treatment systems. Additionally, there is a desire for a robust system and method with as few changes as possible in the system materials and equipment to keep the systems economical. Furthermore, there is a desire to provide a user friendly and simple bilge water system and method for the operation of the system.

It is therefore an objective of the present invention to limit the risk for corrosion in the bilge water treatment systems.

It is a further objective of the invention to provide a bilge water treatment system, which is robust.

Furthermore, it is an objective to provide a user friendly and simple bilge water system and method for the operation of the system.

It is a further objective to do as few changes as possible to the system materials and equipment in the bilge water treatment systems, while limiting the risk for corrosion.

According to the present invention, the objectives above are attained by a bilge water system, method for the operation of the system, a computer program and a computer program product as defined in the appended claims.

The invention thus relates to a bilge water system comprising a bilge water container, a bilge water pump downstream of the bilge water container, a heater downstream of the bilge water pump and upstream of an oily water separator. The bilge water container, the bilge water pump, and the oily water separator are arranged in fluid connection via a bilge water supply line. The oily water separator comprises a bilge water inlet in fluid connection with the bilge water supply line, a first outlet in fluid connection with a water discharge line for a separated heavy phase comprising water and a second outlet for conveying a separated light phase comprising oil to a sludge container. The system further comprises at least one freshwater control valve in fluid connection with the oily water separator and a freshwater container. The freshwater container may be of any known type, such as a freshwater tank. According to the present disclosure, the bilge water system comprises a conductivity sensor configured to determine a conductivity value Cᵥ of the bilge water. The conductivity value is configured to be received by a control unit. The control unit is configured to initiate a corrosion reducing operational mode in response to the determined conductivity value Cᵥ, if the conductivity value Cᵥ is higher than a reference conductivity value C_{ref}, and continue with a normal operational mode, if the conductivity value Cᵥ is lower than the reference conductivity value C_{ref}.

Thus, by means of the bilge water system comprising a conductivity sensor, which is connected to a control system, which receives the conductivity value and compares it with a reference value, it is possible to initiate a corrosion reducing operational mode for the bilge water system when the conductivity of the bilge water, and thus the sea water content of the bilge water, is higher than a reference conductivity value. The reference conductivity value may be chosen to correspond to a conductivity value which is the maximum value the materials of the bilge water system are designed for. Thereby, it is possible to limit the risk for corrosion of components in the bilge water treatment system.

The control unit may be configured to display an alert when the corrosion reducing operational mode is initiated. In this way it is possible to make the user aware of the conductivity, and thus the high sea water level of the bilge water. The alert may be visual and/or audial, whereby it is possible to provide a user-friendly way of indicating when the corrosion reducing operational mode is initiated.

According to a variant, the corrosion reducing operational mode may be configured to be performed at least partly manually. In that case, at least one of the bilge water pump, the heater, the oily water separator and the at least one freshwater control valve can be manually controllable. However, the bilge water pump, the heater, the oily water separator and the freshwater control valve may be additionally electrically controllable. In this way, flexibility of the system is improved, and the system can be adapted to individual needs in vessels.

According to another variant, the bilge water pump, the heater, the oily water separator, the at least one freshwater control valve and the conductivity sensor may be electrically controllable and configured to be controlled by the control unit. The corrosion reducing operational mode may thus be at least partly configured to be performed automatically by the control unit. In this way it is possible to make steps of the corrosion reducing operational mode automatically by the control unit without manual operation. Alternatively, some steps may be performed manually and some steps automatically by the control unit. In this way, the system may be adapted for user needs. Additionally, it is possible to reduce the amount of laborious manual steps, while the system is user-friendly and assures that necessary steps are taken to reduce the risk for corrosion when the conductivity, and thus the sea water content of the bilge water, is higher than the system is designed for.

The conductivity sensor may be located downstream of the first outlet of the separator. This may be advantageous, since the oil has been separated from the bilge water downstream of the first outlet. Alternatively, or additionally, the conductivity sensor may be positioned upstream of the bilge water inlet. By using several conductivity sensors in the system, the accuracy of the measurements may be improved.

According to a variant, the conductivity sensor is an electromagnetic flow meter, which is configured to measure both fluid flow and conductivity. In this way, only one sensor is needed to measure two different parameters, which reduces the number of components in the system.

The control unit may be configured to convert the determined conductivity value to a sea water content. In this way the system may be more user-friendly.

The bilge water system may comprise at least one of the following controllers and/or regulators to perform the corrosion reducing operational mode:
- a temperature regulator connected to the heater to decrease a maximum pre-heating temperature of the heater;
- a separator controller configured to increase a minimum frequency of discharges from a bowl of the separator, wherein each discharge comprises freshwater flushing of the bowl;
- at least one freshwater control valve configured to:
   ∘ increase a minimum duration of water flushing at discharge; and/or
   ∘ perform flushing of the separator at a separator stop and fill the separator bowl with freshwater at standstill of the separator.

By providing the devices above, the system may be configured to perform various steps of the corrosion reducing operational mode. In this way, the risk for corrosion can be reduced. Further, it is possible to perform the mode in a flexible way and adapt it to prevailing conditions.

The system may further comprise an oil content meter configured to measure oil content downstream of the oily water separator and upstream of a discharge control valve. The control unit may be configured to receive the oil content of the separated water and control the discharge control valve such that the discharge control valve is configured to discharge the separated bilge water via the water discharge line to the sea, if an oil content of the separated water is below a maximum allowable oil content, or return the separated bilge water back to the bilge water container via a recirculation line, if the oil content of the separated water is above a maximum allowable oil content. In this way it can be assured that the separated bilge water has an oil content below the maximum allowable oil content before it is discharged to the sea.

The above-mentioned objects and advantages are also attained by a method of operating a bilge water system comprising a bilge water container, a bilge water pump downstream of the bilge water container, a heater downstream of the bilge water pump and upstream of an oily water separator. The bilge water container, the bilge water pump, and the oily water separator are arranged in fluid connection via a bilge water supply line. The oily water separator comprises a bilge water inlet in fluid connection with the bilge water supply line, a first outlet in fluid connection with a water discharge line for a separated heavy phase comprising water and a second outlet for conveying a separated light phase comprising oil to a sludge container. The system further comprises at least one freshwater control valve in fluid connection with the oily water separator and a freshwater container. The method comprises the following steps:
- determining a conductivity value Cᵥ of the bilge water by means of a sensor in the bilge water supply line and/or in the water discharge line,
- receiving the determined conductivity value Cᵥ in a control unit,
- comparing the determined conductivity value Cᵥ with a reference conductivity value C_{ref} in the control unit, and
- initiating a corrosion reducing operational mode if the determined conductivity value Cᵥ is higher than the reference conductivity value C_{ref} or continuing with a normal operational mode, if the conductivity value Cᵥ is lower than the reference conductivity value C_{ref}.

The method may further comprise a step of displaying an alert, when the corrosion reducing operational mode is initiated.

The corrosion reducing operational mode may comprise at least one of the following steps:
- decreasing a maximum pre-heating temperature of the heater,
- increasing a minimum frequency of discharges from a separator bowl, wherein each discharge comprises freshwater flushing of the bowl;
- increasing a minimum duration of freshwater flushing at discharge;
- performing flushing of the separator at a separator stop and filling the separator bowl with freshwater at a standstill of the separator.

The method may further comprise a step of converting the determined conductivity value Cᵥ to a sea water content in the control unit.

At least one of the bilge water pump, the heater, the oily water separator, the freshwater control valve and the conductivity sensor may be electrically controllable, and the method may further comprise performing at least one of the steps corrosion reducing operational mode automatically by the control unit. In this way a user-friendly system may be provided while it can be assured that the corrosion reducing operational mode will be performed whenever the conductivity or sea water content in the bilge water is above the reference value.

However, at least one of the steps of the corrosion reducing operational mode may be performed manually. Alternatively, some of the steps mentioned above may be performed manually and some of the steps may be performed automatically by the control system. Thus, a flexible operation method is provided.

The present invention further relates to a computer program, wherein said computer program comprises program code for causing the control unit or a computer connected to the control unit to perform the steps as defined above. The present invention also relates to a computer program product comprising a program code stored on a computer-readable medium for performing the method steps as defined above, when said computer program is run on a control unit or a computer connected to the control unit.

Further aspects of the invention are apparent from the dependent claims and the description

### BRIEF DESCRIPTION OF THE DRAWINGS

For fuller understanding of the present invention and further objects and advantages of it, the detailed description set out below should be read together with the accompanying drawings, in which the same reference notations denote similar items in the various diagrams, and in which:
Fig. 1 schematically illustrates a bilge water system according to an embodiment of the invention;
Fig. 2 schematically illustrates a bilge water system according to another embodiment of the invention;
Fig. 3 schematically illustrates a flow chart for a method for controlling the operation of the bilge water system according to an embodiment of the invention; and
Fig. 4 schematically illustrates a flow chart for a method for controlling the operation of the bilge water system according to different embodiments of the invention; and
Fig. 5 schematically illustrates a control unit or computer according to an embodiment of the invention.

### DETAILED DESCRIPTION

Corrosion problems caused by i.a. the high content of sea water in bilge water can be decreased according to the present invention in an economical manner. It is possible to decrease the risk for corrosion without making essential changes to the materials or components used in the bilge water system equipment. According to the present disclosure, the conductivity value Cᵥ of the bilge water is measured either before or after separation of oil from the bilge water, suitably after the separation. The control unit of the bilge water system is configured to initiate a corrosion reducing operational mode in response to the measured conductivity value Cᵥ, if the conductivity value Cᵥ is higher than a reference conductivity value C_{ref}. The higher the measured conductivity value Cᵥ, the higher is the sea water content of the bilge water.

By the "corrosion reducing operational mode" is meant a mode of operation in which actions can be taken to minimize effects of sea water on the bilge water system and especially on the oily water separator components. For example, freshwater flushing of the separator may be used more frequently than during a normal operation of the separator. Alternatively, or additionally, the temperature of the bilge water supplied to the oily water separator may be reduced. Especially, in the presence of high amounts of chloride ions, the acidity of the bilge water may increase. Acidity in combination with high temperature of the bilge water in the oily water separator may cause accelerated corrosion. Therefore, by limiting the temperature of the bilge water entering the oily water separator, the risk for accelerated corrosion may be reduced.

The "normal operational mode" is a mode in which the oily water separator operates to separate oil from the bilge water, and the separation capacity of the separator is optimized. Thus, the normal operational mode differs from the corrosion reducing operational mode and is performed so that maximum separation performance is prioritized. In the corrosion operational mode of the present invention the bilge water system is adapted so that the oily water separator is protected from corrosion, to keep the separation performance as high as possible.

In order to limit the risk for corrosion in an oily water separator it is advantageous to initiate the corrosion reducing operational mode in response to conductivity value being higher than a reference value. The bilge water system may then be operated in the corrosion reducing operational mode. The corrosion reducing operational mode may be performed in many ways, for example by reducing the temperature of the bilge water entering the oily water separator or by flushing the oily water separator with freshwater often during the operation and for example always before stop, and by operating the separator intermittently with the flushing operation.

The present disclosure provides a system for operating the bilge water system based on the conductivity value of the bilge water and includes a step of determining the conductivity value Cᵥ of the bilge water. The conductivity value can be measured by using a suitable sensor. The conductivity value may be used to determine a content of sea water in the bilge water. Suitably, the conductivity value Cᵥ is determined after the bilge water has been processed through an oily water separator. The bilge water system can then, in case of a high conductivity value and sea water content, initiate a corrosion reducing operational mode of the system, which is different from the normal operational mode. In the corrosion reducing operational mode the bilge water system may be configured to automatically adapt for example the operation of the oily water separator such that it is protected from corrosion.

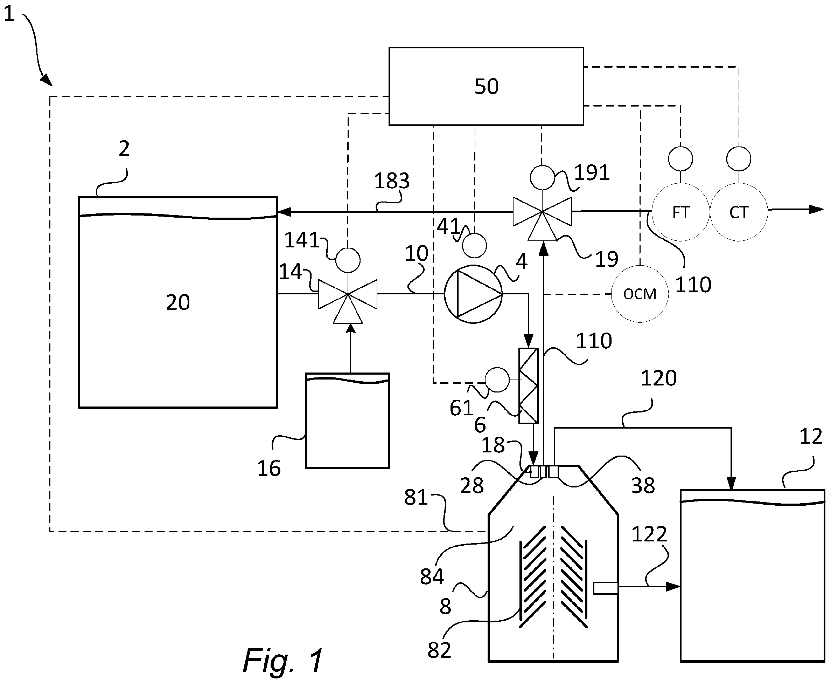

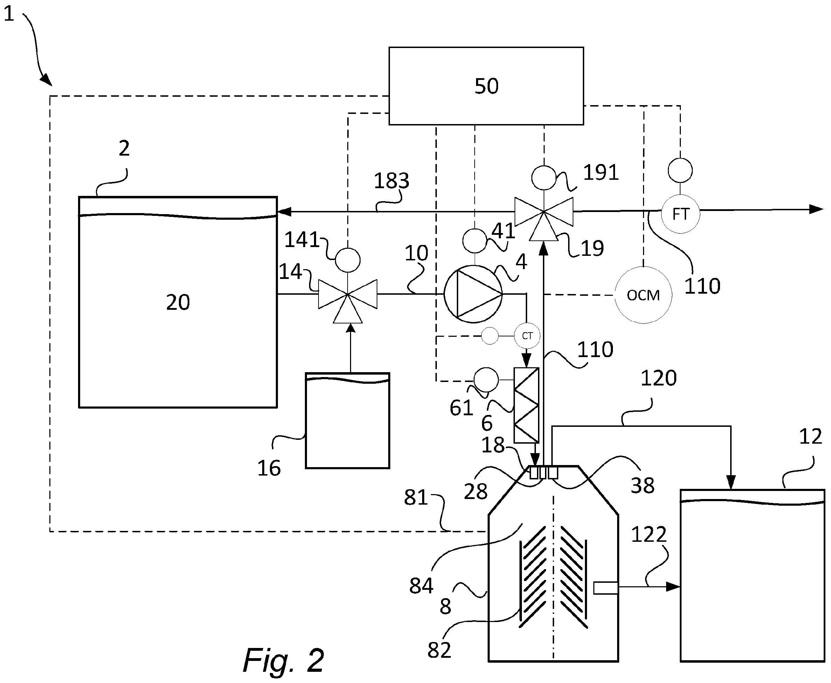

The bilge water system of the present disclosure is now described in more detail with reference to the appended drawings. Fig. 1 and 2 show schematically examples of the bilge water system of the present invention in two different variants with regard of the placement of the conductivity sensor.

Reference is equally made to the examples in Fig. 1 and Fig. 2, in which a bilge water system 1 is shown. The bilge water system 1 comprises a bilge water container 2, which is configured to hold and collect oily bilge water 20 before it is discharged, transferred or disposed. By the container is meant a bilge water tank, which may be one tank or a series of tanks, and/or a bilge well or bilge wells, usually located just above hull in the lowermost part of the vessel. The bilge water supplied to an oily water separator may be contained in any one or in several of these containers. In the example shown in Fig. 1 and 2, the container 2 is in the form of a tank 2 and holds bilge water 20. A bilge water pump 4, which is arranged to suck oily bilge water from the container 2, is fluidly connected to the bilge water container 2 and arranged downstream of the bilge water container 2. The bilge water pump 4 may be electrically controllable and may comprise an electrical controller 41 connected to a control unit 50 of the bilge water system 1.

Generally, in this context, electrical controllers connected to the control unit 50 may be connected by a physical connection or via a wireless connection. The control unit 50 may be located onboard a vessel or at a remote location.

Downstream of the bilge water pump 4 and upstream of an oily water separator 8 a heater 6 is arranged. The heater 6 may be of any suitable kind, such as a gasketed heat exchanger, shell and/or tube heater or electrical heater, which are non-limiting examples or suitable devices. A temperature regulator 61 is connected to the heater 6 and is configured to regulate the pre-heating temperature of the heater. By means of the regulator it is possible to e.g. decrease a maximum pre-heating temperature of the heater. The temperature regulator 61 may be electrically controllable by the control unit 50 and it may be connected to the control unit 50. Alternatively, or additionally the temperature regulator may be a manual regulator.

The oily water separator 8 may be for example a centrifugal separator, which is effective in separation of oily bilge water. The separator is connected to the control unit 50 via a connection 81. A centrifugal separator is effective also for bilge water having a presence of emulsions. Centrifugal separators can destabilize emulsions by a mechanical force provided by the high centrifugal force, whereby separation of oil from the bilge water can be performed effectively. An example of a suitable separator 8 is a centrifugal separator comprising a stack of discs 82 in a separator bowl 84 as illustrated schematically in the appended Fig. 1 and Fig. 2. Such separators are well known and are not described here more in detail. A non-limiting example of a suitable centrifugal separator is a separator comprising a disc stack and being of a self-ejecting type, for example a commercially available Alfa Laval® separator PureBilge®.

In the bilge water system 1, the bilge water container 2, bilge water pump 4, the heater 6 and the oily water separator 8 may be arranged in fluid connection or fluid communication with each other. In the shown examples, the fluid connection is arranged via a bilge water supply line 10. The bilge water supply line 10 is in turn fluidly connected to a bilge water inlet 18 of the oily water separator 8. The separator 8 also comprises a first outlet 28 for a heavy phase comprising bilge water in fluid connection with a water discharge line 110 for the separated water. The separator comprises a radially inwards from the first outlet 28 located second outlet 38 for a light phase comprising oil in fluid connection with a sludge discharge line 120 for conveying the separated oil to a sludge container 12. Solids can be removed from the separator 8 via a solids discharge line 122 to the sludge container. The sludge container 12 can be emptied when filled to a certain limit. The sludge container 12 may be any type of container, such as a tank, capable of containing the sludge comprising oil and solids from the separation process. The sludge discharge line 120 and the solids discharge line 122 may be equipped with necessary valves in a known manner, but these are not shown in detail in the schematic drawings attached.

The oily water separator 8 may be further connected to the control unit 50 via a physical or wireless connection 81. The control unit 50 is configured to control the operation of the oily water separator 8 and it may control for example the frequency of discharges from the separator. In a corrosion reducing mode of the system, the controller may increase a minimum frequency of discharges from the separator, wherein each discharge comprises freshwater flushing of the separator, or the separator bowl.

The bilge water system 1 may further comprise a discharge control valve 19. The discharge control valve 19 may be an electrically controllable valve, which may include an electric controller 191 connected to the control unit. Alternatively, the discharge valve may be a manually controllable valve. The discharge control valve 19 is located downstream of the oily water separator 8. The discharge control valve 19 is configured to discharge the separated bilge water via a water discharge line 110 to the sea or to a clean bilge water container (not shown) if an oil content of the separated water is below a maximum allowable oil content. The oil content may be measured by an oil content meter OCM positioned in connection with the water discharge line 110. As illustrated in Fig. 1 and 2, the OCM is positioned downstream of the first outlet 28 of the oily water separator 8 and upstream of the discharge control valve 19. The maximum allowable oil content is 15 ppm according to the current regulations. If the oil content is higher than the maximum allowable oil content, the discharge control valve 19 is configured to return the separated bilge water back to the bilge water container 2 via a recirculation line 183. The measured oil content may be received by the control unit 50 of the bilge water system 1 and in response to the measured oil content the discharge control valve 19 may be controlled to either open for discharge to the sea via the water discharge line 110 downstream of the discharge control valve 19, or for return of the bilge water back to the bilge water container via the recirculation line 183 downstream of the discharge control valve 19. The dotted line between the electrical controller 191 of the valve and the control unit 50 display a connection between these components, and the connection may be physical or wireless. The discharge control valve 19 may be for example an electrically controllable solenoid valve.

The system 1 further comprises a freshwater supply arrangement comprising at least one freshwater control valve 14 in fluid connection with the oily water separator 8 and a freshwater container 16. As shown in the examples of Fig. 1 and Fig. 2, the freshwater control valve 14 is arranged in fluid connection with the oily water separator 8 via the bilge water supply line 10. The bilge water supply line 10 is arranged in fluid connection with the bilge water inlet 18 of the oily water separator 8. The freshwater control valve 14 is configured to, in the corrosion reducing mode, for example make water flushing at stop of the separator and fill and maintain the oily water separator 8, e.g. the bowl 84 of the separator, and/or other system components, with freshwater when standing still.

The system may be equipped with more than one control valves or freshwater control valves. The freshwater control valves may be for example electrically controllable solenoid valves. The freshwater control valve or valves may be configured to close and/or open the bowl 84 of the oily water separator 8. The freshwater control valve 14 alone or together with other control valves may be configured to increase the minimum duration of water flushing at discharge from the separator. Thus, in addition to flushing at stop to maintain the system filled with freshwater at standstill, more freshwater can be used during the flushing and thus the amount of remaining sea water in the separator can be decreased.

The control unit 50 may be configured to control the freshwater valve 14 and/or valves so that the corrosion reducing operational mode can be performed, i.a. including flushing at stop and maintaining the system filled with freshwater at standstill and increasing the minimum duration of water flushing at discharge from the separator. The control unit 50 may send a command to these valves, which open and thus supply freshwater to the separator. The freshwater valves may thus be used for flushing the bowl and for opening bowl and/or closing bowl.

According to the present invention the bilge water system 1 comprises a conductivity sensor CT configured to determine a conductivity value Cᵥ of the bilge water in the water discharge line 110, as shown in the Fig. 1. Alternatively, or additionally, the conductivity sensor CT may be configured to determine a conductivity value Cᵥ of the bilge water in the bilge water supply line 10, as shown in Fig. 2. The conductivity sensor CT is connected, physically or wirelessly, to the control unit 50 and the conductivity value Cᵥ is configured to be received by the control unit 50. The conductivity sensor may be electrically controllable by the control unit 50. The conductivity value may be determined continuously or at certain, e.g. pre-defined, intervals.

The control unit 50 may be a unit comprising a computer and a display and it may be configured to control each of the connected devices in the bilge water system. Alternatively, the control unit 50 may comprise individual controllers for each of the devices in the bilge water system. The control unit 50 is configured to initiate a corrosion reducing operational mode in response to the determined conductivity value Cᵥ, if the conductivity value is higher than a reference conductivity value C_{ref}. If the conductivity value Cᵥ is lower than a reference conductivity value C_{ref}, the control unit is configured to continue operation of the bilge water system with a normal operational mode. The reference conductivity value C_{ref} may be determined based on the bilge water system material characteristics and other parameters in the system and may be pre-defined.

The conductivity sensor CT may be located downstream of the first outlet 28 of the oily water separator 8, such as downstream of the discharge control valve 19. By positioning the conductivity sensor CT downstream of the first outlet 28 as shown in Fig. 1 in the water discharge line 110, the conductivity and/or the sea water content of the water may be more accurately determined, since the sludge, which may comprise oil and solids, has been separated from the bilge water. According to another alternative as shown in Fig. 2, the conductivity sensor CT is positioned upstream of the inlet 18 of the separator 8.

The conductivity sensor CT may be an electromagnetic flow meter FT configured to measure both fluid flow and conductivity. In this way the number of components in the bilge water system may be decreased. Alternatively, two separate sensors, one sensor FT for measuring flow and one sensor CT for measuring conductivity can be used, as illustrated in Fig. 2. The control unit 50 may be configured to convert the determined conductivity value Cᵥ to a sea water content. This may be advantageous from the user point of view.

The control unit 50 may be configured to display an alert to a user when the corrosion reducing operational mode is initiated. The alert may be in the form of a warning light or sound or an image on a display of the control unit, for example. In this way the user can be informed that the conductivity and/or the sea water content of the bilge water is high and that there is a risk for corrosion. Thereafter, at least some of the steps of the corrosion reducing operational mode can be performed automatically by the control unit, which may be configured to perform the corrosion reducing operational mode automatically. In that case at least one of the bilge water pump 4, the heater 6, the oily water separator 8, the freshwater control valve 14 or valves and the conductivity sensor CT is electrically connected to the control unit 50 and configured to be controlled by the control unit 50. Suitably, all the steps of the corrosion reducing operational mode are performed automatically by the control unit. In that case each of the bilge water pump 4, the heater 6, the oily water separator 8, the freshwater control valve 14 or valves and the conductivity sensor CT is electrically connected to the control unit 50 and configured to be controlled by the control unit 50. By performing at least some of the steps of the corrosion reducing mode automatically, it is ensured that actions necessary to reduce the risk for corrosion are adequately performed and laborious manual adjustment of the regulators in the bilge water system can be avoided.

The control system is configured to initiate the corrosion reducing mode. This can be done for example by displaying to the user that the corrosion reducing mode is initiated. The corrosion reducing operational mode may be at least partly performed manually. In that case, at least one of the bilge water pump 4, the heater 6, the oily water separator 8 and the freshwater control valve (valves) 14 is manually controllable. By performing the corrosion reducing mode manually, it is possible to better control for example the amount of freshwater used and the sludge resulting from the separation process. This may be advantageous in case the amount of freshwater onboard a vessel is limited or the sludge tanks are full.

The system may comprise several controllers and/or regulators to perform the corrosion reducing operational mode. For example, the system may comprise a temperature regulator 61 connected to the heater 6 to decrease a maximum pre-heating temperature of the heater. In this way, the oily bilge water may still be separated in a reliable manner, but the risk for accelerated corrosion can be decreased.

The control unit 50 may be configured to control the oily water separator 8 and for example increase a minimum frequency of discharges from a bowl 84 of the separator 8. Each discharge may comprise freshwater flushing of the bowl, performed by the at least one freshwater valve 14. By flushing the bowl 84 after each discharge, chlorides present in the sea water can be flushed from the bowl, whereby the risk for corrosion can be reduced. When the discharges with flushing occur more frequently than during the normal operational mode, the time the chloride-containing sea water is in contact with the separator components is reduced, and thus the risk for accelerated corrosion is reduced.

Furthermore, the system may comprise one or more freshwater control valves 14 configured to increase the minimum duration of water flushing at discharge and/or perform flushing of the oily water separator 8 at machine stop/standstill. The freshwater control valve 14 or valves may be configured to fill the separator 8 with freshwater at standstill of the separator 8. In this way, the risk for accelerated corrosion is further reduced.

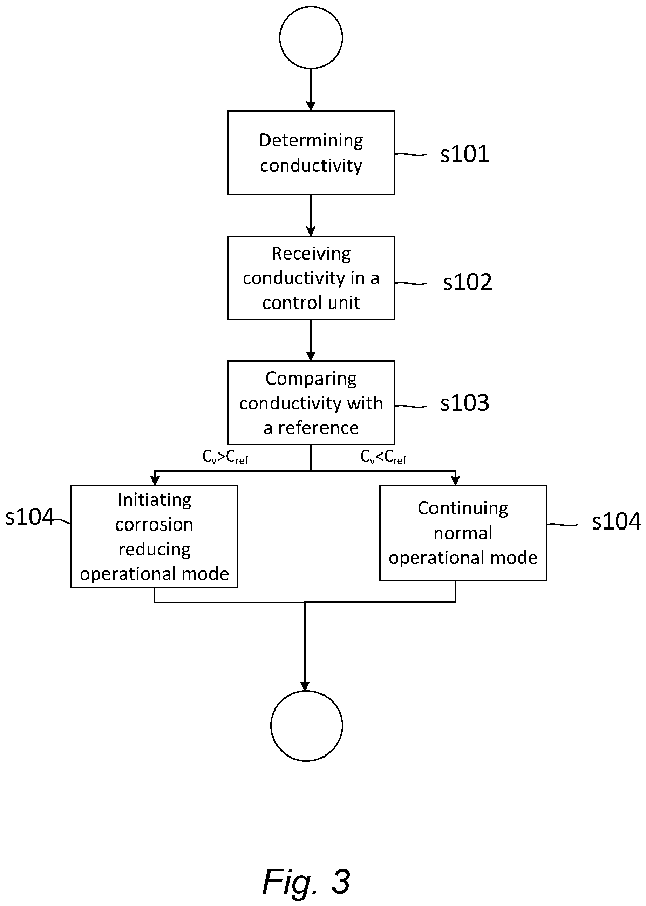

Fig. 3 is provided to illustrate steps in a method of operating a bilge water system comprising the above described bilge water system components, and reference is made to Fig. 1 and 2 and the description above.

In the method the first step s101 comprises determining a conductivity value Cᵥ of the bilge water by means of a sensor in the bilge water supply line and/or in the water discharge line. The sensor may be of any known type and basically measures the ability of the bilge water to conduct an electric current between two electrodes. In a solution, the current flows by ion transport, and the higher the concentration of ions, the higher the conductivity value. An electromagnetic flow meter FT can be used for the determination of the conductivity value. The method may further comprise a step of converting the determined conductivity value Cᵥ to a sea water content. The step may be performed by the control unit 50.

The next step s102 comprises receiving the determined conductivity value Cᵥ in the control unit 50. The conductivity sensor CT is connected to the control unit physically or wirelessly and may be configured to send a signal containing the conductivity value Cᵥ data to the control unit 50, which is then received by the control unit.

The next step s103 is performed in the control unit 50 and comprises comparing the determined conductivity value Cᵥ with a reference conductivity value C_{ref}. The reference conductivity value C_{ref} may be stored in the memory of the control unit and the control unit may comprise a computer program configured to compare the determined conductivity Cᵥ value with the reference value C_{ref}.

In the next step s104, the control unit is configured to initiate a corrosion reducing operational mode, if the determined conductivity value Cᵥ is higher than the reference conductivity value C_{ref}. Alternatively, if the determined conductivity value Cᵥ is lower than the reference conductivity value C_{ref}, the control unit does not initiate the corrosion reducing operational mode and is configured to continue with the normal operational mode.

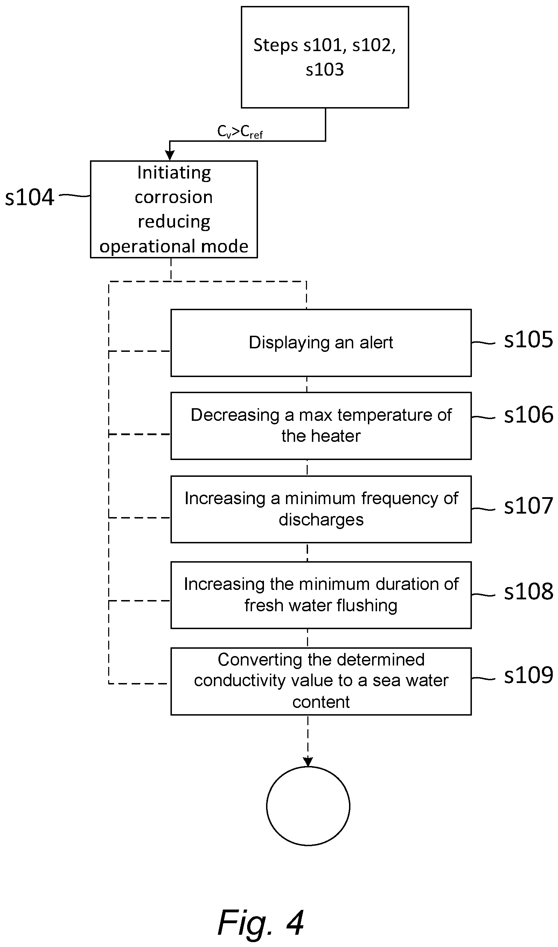

Fig. 4 shows a flow chart illustrating different additional steps of the method according to the invention. All the additional steps need not to be performed, and therefore, the lines between the steps are dotted lines.

According to an embodiment, the method may further comprise a step s105 of displaying an alert to a user when the corrosion reducing operational mode is initiated.

In the corrosion reducing operational mode the method of operating the bilge water system may comprise a step s106 of decreasing a maximum pre-heating temperature of the heater. This can be performed by controlling the regulator 61 of the heater 6 such that the temperature is decreased either automatically by the control unit 50 or by manually.

Additionally, or alternatively, the method may comprise a step s107 of increasing a minimum frequency of discharges from a separator bowl, wherein each discharge comprises freshwater flushing of the bowl.

Furthermore, the method may comprise a step s108 of increasing the minimum duration of freshwater flushing at discharge and/ or performing flushing of the separator at machine stop and allowing standstill of the separator when filled with freshwater.

In a variant of the method it may comprise a step s109 of converting the determined conductivity value Cᵥ to a sea water content in the control unit.

As described above, at least one of the bilge water pump 4, the heater 6, the oily water separator 8, the freshwater valve 14 (or valves) and the conductivity sensor (CT) may be electrically controllable. The method may thus further comprise performing at least some of the steps of the corrosion reducing operational mode automatically by the control unit 50. Alternatively, at least some of the steps of the corrosion reducing operational mode may be performed manually.

For example, if the sea water content in the bilge water is low, discharge intervals can be extended, which reduces creation of sludge and which increases production time. This is due to the fact that during discharge the production is stopped. On the other hand, if the sea water content is high, discharge intervals may be increased whereby more sludge will be produced, but the separator will be protected against corrosion effects, on the long term. Thus, the present method of operating the bilge water at a corrosion reducing mode decreases the risk for accelerated corrosion and prolongs the total lifetime of the system.

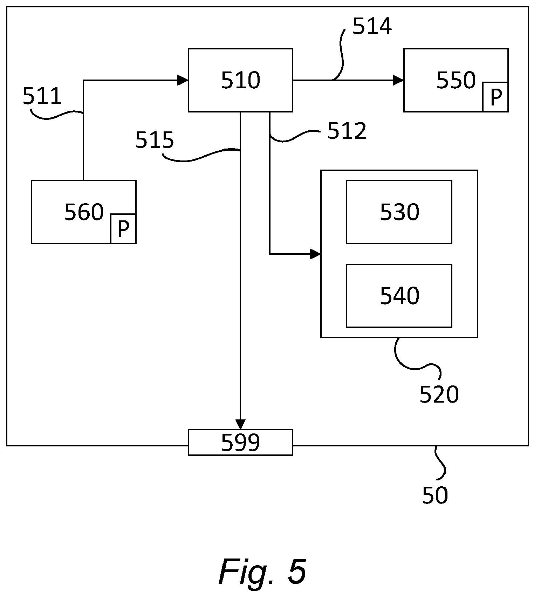

Figure 5 schematically illustrates a control unit 50. The control unit 50 may comprise a computer, or a computer may in a version comprise the control unit 50. The term "connected to" refers herein to a communication link which may be a physical connection such as an optoelectronic communication line, or a non-physical connection such as a wireless connection, e.g. a radio link or microwave link.

The control unit 50 may comprise a non-volatile memory 520, a data processing unit 510 and a read/write memory 550. The non-volatile memory 520 has a first memory element 530 in which a computer program, e.g. an operating system, is stored for controlling the function of the control unit 50. The control unit 50 further comprises a bus controller, a serial communication port, I/O means, an A/D converter, a time and date input and transfer unit, an event counter and an interruption controller (not depicted). The non-volatile memory 520 has also a second memory element 540.

There is provided a computer program P which comprises routines for a method for controlling the operation of the bilge water system 1 according to the invention. The computer program P comprises routines for receiving a determined conductivity value Cᵥ. The computer program P comprises routines for comparing the determined conductivity value Cᵥ with the reference conductivity value C_{ref}. The computer program P comprises routines for initiating a corrosion reducing operational mode if the determined conductivity value Cᵥ is higher than the reference conductivity value C_{ref} or continuing with a normal operational mode, if the conductivity value Cᵥ is lower than the reference conductivity value C_{ref}. The computer program P may comprise routines for displaying an alert when the corrosion reducing operational mode is initiated. Further, the computer program P may comprise routines for decreasing a maximum pre-heating temperature of the heater. The computer program P may comprise routines for increasing a minimum frequency of discharges from a separator bowl, wherein each discharge comprises freshwater flushing of the bowl. The computer program P may comprise routines for increasing a minimum duration of freshwater flushing at discharge. The computer program P may comprise routines for performing flushing of the separator at a separator stop and filling the separator bowl with freshwater at a standstill of the separator. The computer program P may comprise routines for converting the determined conductivity value Cᵥ to a sea water content in the control unit. The program P may be stored in an executable form or in a compressed form in a memory 560 and/or in a read/write memory 550.

Where the data processing unit 510 is described as performing a certain function, it means that the data processing unit 510 effects a certain part of the program stored in the memory 560 or a certain part of the program stored in the read/write memory 550.

The data processing device 510 can communicate with a data port 599 via a data bus 515. The non-volatile memory 520 is intended for communication with the data processing unit 510 via a data bus 512. The separate memory 560 is intended to communicate with the data processing unit 510 via a data bus 511. The read/write memory 550 is adapted to communicating with the data processing unit 510 via a data bus 514.

When data are received on the data port 599, they are stored temporarily in the second memory element 540. When input data received have been temporarily stored, the data processing unit 510 is prepared to effect code execution as described above.

Parts of the method herein described may be effected by the control unit 50 by means of the data processing unit 510 which runs the program stored in the memory 560 or the read/write memory 550. When the control unit 50 runs the program, the method herein described are executed.

The foregoing description of the preferred embodiments of the present invention is provided for illustrative and descriptive purposes. It is not intended to be exhaustive or to restrict the invention to the variants described. Many modifications and variations will obviously be apparent to one skilled in the art. The embodiments have been chosen and described in order best to explain the principles of the invention and its practical applications and hence make it possible for specialists to understand the invention for various embodiments and with the various modifications appropriate to the intended use. The invention can be supplemented and modified in any manner within the scope of the invention as defined by the enclosed claims.

## Claims

1. A bilge water system (1) comprising:
a bilge water container (2), a bilge water pump (4) downstream of the bilge water container (2), a heater (6) downstream of the bilge water pump (4) and upstream of an oily water separator (8), the bilge water container (2), the bilge water pump (4), and the oily water separator (8) being arranged in fluid connection via a bilge water supply line (10), wherein the oily water separator comprises a bilge water inlet (18) in fluid connection with the bilge water supply line (10), a first outlet (28) in fluid connection with a water discharge line (110) for a separated heavy phase comprising water and a second outlet (38) for conveying a separated light phase comprising oil to a sludge container (12), the system (1) further comprising at least one freshwater control valve (14) in fluid connection with the oily water separator (8) and a freshwater container (16), **and wherein** the bilge water system (1) comprises a conductivity sensor (CT) configured to determine a conductivity value Cᵥ of the bilge water, the conductivity value Cᵥ being configured to be received by a control unit (50), which control unit (50) is configured to initiate a corrosion reducing operational mode in response to the determined conductivity value Cᵥ, if the conductivity value Cᵥ is higher than a reference conductivity value C_{ref}, and continue with a normal operational mode, if the conductivity value Cᵥ is lower than the reference conductivity value C_{ref}.

2. The bilge water system of claim 1, wherein the control unit (50) is configured to display an alert when the corrosion reducing operational mode is initiated.

3. The bilge water system of claim 1 or 2, wherein the corrosion reducing operational mode is configured to be performed at least partly manually and wherein at least one of the bilge water pump (4), the heater (6), the oily water separator (8) and the at least one freshwater control valve (14) are manually controllable.

4. The bilge water system of claim 1, 2 or 3, wherein the bilge water pump (4), the heater (6), the oily water separator (8), the at least one freshwater control valve (14) and the conductivity sensor (CT) are electrically controllable and configured to be controlled by the control unit (50), and wherein the corrosion reducing operational mode is at least partly configured to be performed automatically by the control unit (50).

5. The bilge water system according to any one of claims 1 to 4, wherein the conductivity sensor (CT) is located downstream of the first outlet (28) of the oily water separator (8).

6. The bilge water system according to any one of the preceding claims, wherein the conductivity sensor (CT) is an electromagnetic flow meter (FT) configured to measure both fluid flow and conductivity.

7. The bilge water system according to any one of the preceding claims, wherein the control unit (50) is configured to convert the determined conductivity value Cᵥ to a sea water content.

8. The bilge water system according to any one of the preceding claims, wherein the system comprises at least one of the following controllers and/or regulators to perform the corrosion reducing operational mode:
- a temperature regulator (61) connected to the heater (6) to decrease a maximum pre-heating temperature of the heater (6);
- a separator controller (50) configured to increase a minimum frequency of discharges from a bowl (84) of the oily water separator (8), wherein each discharge comprises freshwater flushing of the bowl (84);
- at least one freshwater control valve (14) configured to:
∘ increase a minimum duration of water flushing at discharge; and/or
∘ perform flushing of the oily water separator (84) at a separator stop and fill the separator bowl (84) with freshwater at standstill of the separator.

9. The bilge water system according to any one of the preceding claims, wherein the system (1) further comprises an oil content meter (OCM) configured to measure oil content downstream of the oily water separator and upstream of a discharge control valve (19), wherein the control unit (50) is configured to receive the oil content of the separated water and control the discharge control valve (19) such that the discharge control valve (19) is configured to discharge the separated bilge water via the water discharge line (110) to the sea if an oil content of the separated water is below a maximum allowable oil content, or return the separated bilge water back to the bilge water container via a recirculation line (183) if the oil content of the separated water is above a maximum allowable oil content.

10. Method of operating a bilge water system comprising a bilge water container (2), a bilge water pump (4) downstream of the bilge water container (2), a heater (6) downstream of the bilge water pump (4) and upstream of an oily water separator (8), the bilge water container (2), the bilge water pump (4), and the oily water separator (8) being arranged in fluid connection via a bilge water supply line (10), wherein the oily water separator comprises a bilge water inlet (18) in fluid connection with the bilge water supply line (10), a first outlet (28) in fluid connection with a water discharge line (110) for a separated heavy phase comprising water and a second outlet (38) for conveying a separated light phase comprising oil to a sludge container (12), the system (1) further comprising at least one freshwater control valve (14) in fluid connection with the oily water separator (8) and a freshwater container (16), the method comprising the following steps:
- determining (s101) a conductivity value Cᵥ of the bilge water by means of a sensor in the bilge water supply line and/or in the water discharge line,
- receiving (s102) the determined conductivity value Cᵥ in a control unit (50),
- comparing (s103) the determined conductivity value Cᵥ with a reference conductivity value C_{ref} in the control unit, and
- initiating (s104) a corrosion reducing operational mode if the determined conductivity value Cᵥ is higher than the reference conductivity value C_{ref} or continuing with a normal operational mode, if the conductivity value Cᵥ is lower than the reference conductivity value C_{ref}.

11. The method according to claim 10, further comprising a step of displaying (s105) an alert, when the corrosion reducing operational mode is initiated.

12. The method according to any one of claims 10 to 12, wherein the corrosion reducing operational mode comprises at least one of the following steps:
- decreasing (s106) a maximum pre-heating temperature of the heater,
- increasing (s107) a minimum frequency of discharges from a separator bowl, wherein each discharge comprises freshwater flushing of the bowl;
- increasing (s107) a minimum duration of freshwater flushing at discharge;
- performing (s108) flushing of the separator at a separator stop and filling the separator bowl with freshwater at a standstill of the separator.

13. The method according to any one of claims 10 or 11, comprising a step of converting (s109) the determined conductivity value Cᵥ to a sea water content in the control unit (50).

14. The method according to any one of claims 13, wherein at least one of the bilge water pump (4), the heater (6), the oily water separator (8), the at least one freshwater control valve (14) and the conductivity sensor (CT) is electrically controllable, and the method further comprises performing at least one of the steps of the corrosion reducing operational mode automatically by the control unit (50).

15. The bilge water system according to claim 12, comprising performing at least one of the steps (s106)-(s108) of the corrosion reducing operational mode manually.

16. A computer program (P), wherein said computer program comprises program code for causing the control unit (50) or a computer connected to the control unit (50) to perform the steps according to any of the claims 10-14.

17. A computer program product comprising a program code stored on a computer-readable medium for performing the method steps according to any of claims 10 - 14, when said computer program is run on a control unit (50) or a computer connected to the control unit.
